# EUROPEAN PATENT SPECIFICATION

(11) **EP 0 662 124 B1**
(45) Date of publication and mention of the grant of the patent: **12.06.2002**
(21) Application number: 93921270.0
(22) Date of filing: 31.08.1993
(51) Int. Cl.: C12N 5/08, G01N 35/08, G01N 33/50, G01N 15/12, G01N 15/14

(54) **HIGH SPEED FLOW CYTOMETRIC SEPARATION OF VIABLE MAMMALIAN CELLS**
DIE TRENNUNG LEBENDER SÄUGETIERZELLEN DURCH HOCH GESCHWINDIGKEITS-DURCHFLUSSCYTOMETRIE
SEPARATION DE CELLULES MAMMIFERES VIABLES PAR CYTOMETRIE EN FLUX A HAUTE VITESSE

(30) Priority: 03.09.1992 US 940097
(43) Date of publication of application: 12.07.1995
(73) Proprietor: SYSTEMIX, INC., Palo Alto, California 94304 (US); THE REGENTS OF THE UNIVERSITY OF CALIFORNIA, Oakland, California 94612-3550 (US)
(72) Inventor: SASAKI, Dennis, T., Palo Alto, CA 94303 (US); VAN DEN ENGH, Gerrit, J., Livermore, CA 94550 (US); BUCKLE, Anne-Marie, Menlo Park, CA 94025 (US)
(74) Representative: Becker, Konrad
(86) International application number: US9308205
(87) International publication number: WO9405775

(56) References cited:
- US-A- 5 061 620
- J.W.GRAY ET AL.: "High-speed chromosome sorting" SCIENCE, vol. 238, 16 October 1987, pages 323-329, XP002078870 washington dc usa
- G. VAN DN ENGH ET AL.: "Parallel processing data acquisition system for multilaser flow cytometry" CYTOMETRY, vol. 10, 1989, pages 282-293, XP002078871 chicago il usa
- D. PETERS ET AL.: "The LLNL high-speed sorter: design features, operational characteristics and biological utility." CYTOMETRY, vol. 6, 1985, pages 290-301, XP002078873 chicago il usa
- MELAMED et al., "Flow Cytometry and Sorting", published 1990 by Wiley-Liss, Inc., see pages 145-169 (LIDMO et al.).
- MELDAMED et al., "Flow Cytometry and Sorting", published 1990, by Wiley-Liss, Inc., see pages 669-683 (VISSER).
- Blood, Volume 74, No. 4, issued September 1989, W. KNAPP et al., "CD Antigens 1989", pages 1448-1449, see entire document.

## Description

The work disclosed herein was supported by a contract between the Regents of the University of California and the United States Department of Energy for the operation of the Lawrence Livermore National Laboratory, contract number W-7405-ENG-48. The United States Government may have certain rights in this invention.

### INTRODUCTION

### Technical Field

The field of this invention is the separation of mammalian cell subsets.

### Background

There is an extraordinary variety of cells in mammals. Cells which make up various organs and tissues may include a great variety of different types of cells having different functions and interacting to form different structures. In many situations, the isolation of the tissue or organ results in a complex mixture of cells, where one set or subset of cells may be desired. This is graphically exemplified by hematopoietic cells, particularly as found in bone marrow and the peripheral blood, as well as many lymphoid organs.

One of the most versatile ways to separate cells is by use of flow cytometry, where the particles, *i.e.* cells, can be detected by fluorescence or light scattering. However, due to the low processing rate common to commercially-available cell sorters, purification of a small population from large quantities of cells is not feasible.

Exemplary of the situation with cells is the attempt to purify large numbers of chromosomes for the production of recombinant DNA libraries or gene mapping. Calculations indicate that a commercial cell sorter processing at an average 2000 events per second would require over 120 hours in order to obtain 1 µg of DNA (Cremer, *et al*., Human Genet. 60, 262-266 [1982]).

A high speed sorter has been recently developed at the Lawrence Livermore National Laboratory which is able to routinely purify large quantities of human chromosomes in a few hours, where commercially-available cell sorters would take several days. This sorter is described in Gray, *et al*., Science 238, 323-329 (1987); Peters, (1989), Chromosome purification by high-speed sorting. Gray, J. (ed), In "Flow Cytogenetics." London; Academic Press, pp. 211-224; Peters, *et al*., Cytometry (1985) 6, 290-301, van den Engh and Stokdijk, Cytometry (1989) 10, 282-293). Gray et al Science (1987) 238, discloses separation of chromosomes at a pressure of 1.4 x 10⁴ gcm⁻² (200 psi) see table 1, page 324, operating pressure of high-speed sorter.

Peters et al ., Cytometry (1985) discloses a dual-beam, high speed sorter (HiSS) with a droplet production rate of 200,000s⁻¹ capable of operating at over pressures in excess of 1.4 x 10⁴gcm⁻² (200 psi).
van der Engh and Stokdijk discloses a parallel processing data acquisition system for multilaser flow cytometry and cell sorting.
Sasaki et al 1987 discloses a method for simultaneous two color analysis or sorting of viable leukocytes which requires only a single laser. The method utilizes propidium iodide, which stains dead cells and thereby excludes such cells from the analysis.

While the sorter has been successful with chromosomes, the manner in which it achieves the high speed would be expected to put extraordinary stresses on viable cells. The technological difference in the available commercial systems and a high speed sorter lies in the. significant increase of stable droplet generation. Augmented droplet formation, combined with the occupance of particles following Poisson statistics, ensures that an increased amount of "space" exists between the events to diminish the effects of rejection due to coincidence. This factor alone minimizes the probability of having more than one event per droplet. Design considerations which are incorporated into a high-speed sorter to obtain greater droplet frequencies include greater operational pressure handling (50-100 psi) as compared to conventional sorters which use about 5-15 psi, more usually about 12 psi, in order to force liquid through the nozzle at a higher rate, an acoustic oscillator, with ultrasonic frequency capabilities (up to 200 KHz as compared to 20-30 KHz in a commercial sorter), droplet charging and deflection electronic subsystems, and high-speed digital processing electronics. For descriptions of each of these components, see the Experimental section.

It is therefore of substantial interest to determine whether parameters can be defined where viable cells can be efficiently sorted at high speeds, so as to give high yields of cell subset populations, with substantial retention of viability, retention of phenotype, and high efficiency in the proportion of cells isolated which are available, as well as the purity of the population obtained.

### SUMMARY OF THE INVENTION

Mammalian cells are isolated from a mixture of cells, where the desired population is a small fraction of the total cellular population. The subset of interest is isolated by differential fluorescent marking between the subset of interest and the other cells present and sorting through a high-speed cell sorter. The subset can be obtained as viable cells in high purity with high efficiency as compared to the number of cells originally present in the population.

### DESCRIPTION OF THE SPECIFIC EMBODIMENTS

Viable cells are separated into two or more different populations at high speed and high efficiency to provide subsets of viable cells of high purity. The cell types can be widely varied, including hematopoietic cells, neuronal cells, endothelial cells, epithelial cells, fibroblasts, myoblasts, mesenchymal cells, NK cells, maternal/fetal erythroid cells. The cells of particular interest are hematopoietic cells, which include progenitor and mature cells of the lymphoid, myelomonocytic and erythroid lineages, as well as stem cells (the original progenitors) and subsets of these cells, such as T-cells and subsets of T-cells, such as CD4+ and CD8+, cells having specific surface membrane proteins, such as T-cells having a specific variable region, a specific homing receptor, growth factor, hormone and CSF receptors, neurotransmitter receptors.

The cells may be derived from any mammal, which includes primate, particularly human, murine, particularly mouse, equine, bovine, ovine, porcine, lagomorpha, canine, feline.

The source of the cells may be any source which is convenient. Thus, various tissues, organs, fluids may be the source of the cellular mixtures. Of particular interest are bone marrow and peripheral blood, although other lymphoid tissues are also of interest, such as spleen, thymus, and lymph node. For use in flow cytometry, cells from solid tissue will normally be dispersed in an appropriate medium.

The cellular compositions which are introduced into the high-speed flow cytometer may or may not have been subjected to prior treatment. Prior treatments may involve removal of cells by various techniques, including centrifugation, using Ficoll-Hypaque, panning, affinity separation, using antibodies specific for one or more markers present as surface membrane proteins on the surface of cells, or other technique, which provides enrichment of the set or subset of cells of interest. Usually, the cellular composition of hematopoietic cells separated by the high-speed flow cytometry will have not more than about 5 no.%, usually not more than about 2 no.%, and more usually not more than about 1 no.% of the cells of interest, and will usually have at least about 0.01 no.%, preferably at least about 0.02 no.%, and preferably at least about 0.05 no.% of the cells of interest.

Cells of interest will usually be differentiated by virtue of surface membrane proteins which are characteristic of the cells. For example, CD34 is a marker for immature hematopoietic cells. Markers for dedicated cells include CD10, CD19, CD20, and sIg for B cells, CD15, CD16 and CD33 for myeloid cells, CD15 for monocyte/granulocyte cells, CD41 for megakaryocytes, CD38 for lineage dedicated cells, CD3, CD4, CD7, CD8 and TCR for T cells, Thy-1 for progenitor cells, and glycophonin, for erythroid progenitors. In isolating early progenitors, one may divide a CD34⁺ enriched fraction into Lin⁻ (CD10⁻, CD19⁻, CD33⁻), Thy-1⁺ or into CD38⁻ to provide a composition substantially enriched for early progenitor cells. Other markers of interest include Vα and Vβ chains of the T-cell receptors.

The medium in which the cells are sorted will usually include nutrients and may or may not be an enriched medium. Various media are commercially available and may be used according to the nature of the cells.

The basis for the separation in the high-speed flow cytometer will depend upon the light detectable characteristics of the cells. Thus, various light characteristics can be used in the cell sorter, which characteristics include light scatter and fluorescence, where the flow cytometer can detect the effect of a cell on a laser light beam. Depending upon the nature of the cell composition, various characteristics can be employed.

As markers, a wide variety of fluorescent molecules can be employed, which may be conjugated as labels to antibodies, specific for cellular markers which identify particular sets and subsets of cells. Ligands to receptors may be conjugated, where the ligands may be naturally occurring or synthetic, proteins, saccharides, synthetic organic molecules or molecules which bind to other molecules, such as MHC-TCR combinations Fluorescent markers which are available include fluorescein, Texas red, phycobiliproteins, allophycocyanin, cyanine derivatives, rhodamine, and tandem conjugates for surface markers and a host of fluorescent probes used to indicate physiological development and nuclear parameters.

The conditions of operation of the high-speed flow cytometer will generally involve a system pressure for the fluidics of at least about 3.5 × 10³ gcm⁻² (50 psi) and not more than about 7.0 × 10³ gcm⁻² (100 psi), usually not more than about 5.2 × 10³ gcm⁻² (75 psi). Preferably, the system pressure will be in the range of about 3.9-4.6 × 10³ gcm⁻² (55-65 psi), more preferably about 4.2 × 10³ gcm⁻² (60 psi). The nozzle diameter will be at least about 25 µm, more usually at least about 30 µm and not more than about 100 µm, preferably about 40-75 µm, more preferably about 50 µm. A calculated velocity for the stream will generally be at least about 15 m/s, more usually at least about 20 m/s and not more than about 30 m/s, generally ranging from about 20-25 m/s. The droplet frequency will be at least about 75 KHz, more usually at least about 90 KHz and not more than about 150 KHz, more usually not more than about 125 KHz and preferably about 100 KHz. The delay setting will be at least about 90 and not more than about 125, more usually from about 100-110. The timing value is important to the success of the sorting, since it signals the electronics when to charge the droplet containing the cell of interest.

The droplet occupancy will usually be at least 1%, more usually at least 5% and not more than about 25%, frequently not more than about 20%, generally in the range of about 15-20%. Thus, the sample flow rate will generally have at least about 10,000 events per second, more usually at least about 12,000 events per second, and generally not more than about 30,000 events per second, more usually not more than about 25,000 events per second, preferably in the range of about 15,000-20,000 events per second.

The cells may be collected in any appropriate medium as appropriate, using a serum cushion, or other collection medium. The cells may then be used as appropriate. In some instances, it may be desirable to remove any antibody markers, where the cells may be flooded with molecules which are competitive for the monoclonal antibodies with the surface membrane proteins, so as to substantially remove the antibodies from the surface. The cells may then be washed free of the competitor and the antibodies which are non-specifically bound and may then be used.

The cells find a wide variety of applications. Where hematopoietic stem cells are involved, these may be used for bone marrow transplantation, for identification of growth factors, for production of various hematopoietic cell progenitor cell subsets by employing appropriate growth factors. For specific T-cells, these cells may find use in the treatment of cancer as in the case of tumor-infiltrating lymphocytes, for identification of T-cells associated with specific diseases, *e.g.* autoimmune diseases, for B-cells having particular sIg binding to a specific epitope of interest.

The following examples are offered by way of illustration and not by way limitation.

### EXPERIMENTAL

Murine bone marrow is obtained from BA1.1 mice and processed to remove red cells and granulocytes by density gradient (Nycodenz). Cells were then resuspended in cold Hank's Basic Salt Solution ("HBSS") containing propidium iodide to discriminate viable cells (Sasaki, *et al*., Cytometry (1987) 8, 413).

A high-speed flow cytometry sorter was employed (Gray, *et al*. Science (1987) 238, 323-329; Peters (1989), Chromosome purification by high-speed sorting. Gray, J. (ed), In "Flow Cytogenetics." London; Academic Press, pp. 211-224; Peters, *et al*., Cytometry (1985) 6, 290-301; van den Engh and Stokdijk, Cytometry (1989) 10, 282-293). Visible laser excitation (488 nm) was employed. Latex calibration particles were run to check the position of scatter and fluorescence detectors. The system pressure for the fluidics was set at 4.2 × 10³ gcm⁻² (60 psi) with a jet emanating from a 50 µm diameter nozzle at a calculated velocity of 23 m/s. The droplet frequency was set at 100 KHz. These particles were also used to the determine the optimal droplet delay setting.

When the system was performing according to the calibration factors, the mouse bone marrow sample was placed on the instrument. The detectors were then adjusted to resolve the scatter profile of the lymphoid from myeloid cells. The sample flow rate was then adjusted to 17,000 events per second. Resolution of the scatter profile changed slightly, compared to previous visualizations on the FACStar due to the elasticity of the cells in the high-pressure/high velocity system. Neutrophils were found to remain intact going through the system and were clearly resolvable.

Five separate runs were performed on the same sample. One run was performed at a throughput at 13,000 events per second followed by three at 17,000 per second and one at 18,000 events per second. Four of the runs were based on the gating of all leucocytes from RBC and debris in the scatter profile and one gated on the lymphoid cells. Drop delay times were also varied. 10⁶ gated cells were collected in each of the runs in under 5 min. Sorted cells were collected in plastic tubes containing fresh medium and immediately placed on ice for storage.

**Table 1.**

| Sort variables. | | | |
|---|---|---|---|
| Sort 1: | 18,000 per second | Delay = 103 | Gated on WBC scatter |
| Sort 2: | 17,000 per second | Delay = 103 | Gated on WBC scatter |
| Sort 3: | 17,000 per second | Delay = 100 | Gated on WBC scatter |
| Sort 4: | 13,000 per second | Delay = 106 | Gated on WBC scatter |
| Sort 5: | 17,000 per second | Delay = 103 | Gated on lymphoid scatter |

Portions (5 × 10⁵ cells) of the sorted samples were analyzed on a Becton-Dickinson FACScan flow cytometer. Purity for all samples based on scatter profiles was better than 85% based on corresponding gate criteria. Cell counts and viability using Trypan blue showed viability greater than 90%.

5 × 10⁵ cells of each of the sorted samples were used for injections into C57 mice. 1 × 10⁵ cells were used in 4 mice for sort 1-3 by injecting the cell suspension in the sub-orbital sinus of the animals. Three mice were injected using sort faction 4. Only 3 × 10⁴ cells were injected into 3 mice from the sort 5 fraction, gated on lymphoid. The presence of spleen colonies from the injected mice were ascertained from these animals after 13 days (Spangrude, *et al*. Science (1988) 241, 58-62). Control mice formed no spleen colonies.

**Table 2.**

| **Spleen colony results.** | |
|---|---|
| Sorted Fraction | Spleen Colonies |
| 1. | 10, 5, 9, 10 |
| 2. | 10, 9, 8, 9 |
| 3. | 10, 11, 8, 9 |
| 4. | x, 7, 9 |
| 5. | 1, 3, 2 |

It is evident from the above results, that the subject process allows for the efficient separation of small numbers of cells in a highly mixed population of cells. High purity and efficiency of separation can be achieved, where the cells retain viability and their ability to proliferate, as demonstrated by the formation of spleen colonies. Thus, the subject method provides the ability to separate a small proportion of cells from a large number of cells for use in a large variety of applications.

Although the foregoing invention has been described in some detail by way of illustration and example for purposes of clarity of understanding, it will be readily apparent to those of ordinary skill in the art in light of the teachings of this invention that certain changes and modifications may be made thereto.

## Claims

1. A method for separating a mammalian cell population subset from a mixture of cells using flow cytometry, said subset having a light detectable characteristic, said method providing a highly purified viable cell population subset, said method comprising:
passing a stream of said cells through a nozzle having a diameter of from 25 to 100 µm, at a flow speed in the range of 15 to 30 m/s, wherein the droplet frequency is 75 to 150 Khz, the resulting sample flow rate being in the range of 10,000 to 30,000 events per second, while separating said subset of cells by detecting the presence of said light detectable characteristic; and
isolating a viable cell population subset having a purity of greater than 80%, **characterized in that** the method is carried out at a pressure of at least 3.5 x 10³ gcm⁻² (50 psi) and not more than 7.0 x 10³ gcm⁻² (100 psi).

2. A method according to Claim 1, wherein said cells are hematopoietic cells.

3. A method according to Claim 1, wherein said light detectable characteristic is a fluorescent labeled molecule specific for a surface membrane protein of said subset, and said method further comprises: reacting said mixture of cells with said fluorescent labeled molecule prior to said passing a stream of cells.

4. A method according to any one of claims 1, 2 and 3, wherein said cells are either of bone marrow cells or peripheral blood cells.

5. A method according to any one of claims 1, 2, 3 and 4, wherein said subset is stem cells.

6. A method according to Claim 3, wherein said fluorescent labeled molecule is a monoclonal antibody specific for human Thy-1.

7. A method according to Claim 3, wherein said mixture of cells is enriched for CD34⁺ cells.

8. A method according to Claim 3, wherein said mixture of cells is depleted for CD38⁺ cells.

9. A method according to Claim 3, wherein the cells are hematopoietic cells, and wherein said subset comprises fewer than 1% of the cells of said mixture.

## Patentansprüche

1. Verfahren zur Abtrennung einer Untergruppe einer Säugerzellpopulation aus einem Zellgemisch mittels Durchflußzytometrie, wobei diese Untergruppe ein lichtdetektierbares Merkmal aufweist, wobei dieses Verfhren eine hochreine lebende Zellpopulationsuntergruppe liefert durch Passage eines Zellstroms durch eine Düse mit einem Durchmesser von 25 bis 100 µm mit einer Fließgeschwindigkeit im Bereich von 15 bis 30 m/s, worin die Tröpfchenfrequenz 75 bis 150 kHz beträgt, die entstehende Probenflußrate im Bereich von 10000 bis 30000 Ereignissen pro Sekunde liegt und diese Untergruppe an Zellen durch die Detektion des lichtdetektierbaren Merkmals abgetrennt wird, und durch Isolierung einer lebenden Untergruppe einer Zellpopulation mit einer Reinheit von mehr als 80 % **dadurch gekennzeichnet, daß** das Verfahren in Gegenwart von etwa 3,5 x 10³ gcm⁻² (50 psi) und nicht mehr als 7,0 x 10³ gcm⁻² (100 psi) ausgeführt wird.

2. Verfahren nach Anspruch 1, worin die Zellen hämatopoetische Zellen sind.

3. Verfahren nach Anspruch 1, worin das lichtdetektierbare Merkmal ein fluoreszenzmarkiertes Molekül ist, das für ein Oberflächenmembranprotein dieser Untergruppe spezifisch ist und das Verfahren ferner die Umsetzung dieses Zellgemisches mit einem fluoreszenzmarkierten Molekül vor der Passage des Zellstroms umfaßt.

4. Verfahren nach einem der Ansprüche 1, 2 und 3, worin die Zellen entweder Knochenmarkszellen oder periphere Blutzellen sind.

5. Verfahren nach einem der Ansprüche 1, 2, 3 und 4, worin die Untergruppe Stammzellen sind.

6. Verfahren nach Anspruch 3, worin das fluoreszenzmarkierte Molekül ein monoklonaler Antikörper ist, der für humanes Thy-1 spezifisch ist.

7. Verfahren nach Anspruch 3, worin das Zellgemisch bezüglich CD34⁺ Zellen angereichert ist.

8. Verfahren nach Anspruch 3, worin das Zellgemisch bezüglich CD38⁺ Zellen abgereichert ist.

9. Verfahren nach Anspruch 3, worin die Zellen hämatopoetische Zellen sind und worin die Untergruppe weniger als 1 % der Zellen des Gemisches umfaßt.

## Revendications

1. Méthode pour séparer un sous-ensemble de population cellulaire de mammifère d'un mélange de cellules en utilisant une cytométrie en flux, ledit sous-ensemble ayant une caractéristique détectable à la lumière, ladite méthode fournissant un sous-ensemble de population cellulaire viable hautement purifié, ladite méthode comprenant les étapes consistant à :
faire passer un courant desdites cellules à travers une buse ayant un diamètre de 25 à 100 µm, à une vitesse de flux comprise dans l'intervalle de 15 à 30 m/s, la fréquence des gouttelettes étant de 75 à 150 kHz, le débit échantillon résultant étant compris dans l'intervalle de 10 000 à 30 000 événements par seconde, tout en séparant ledit sous-ensemble de cellules par détection de la présence de ladite caractéristique détectable à la lumière ; et
isoler un sous-ensemble de population cellulaire viable ayant une pureté supérieure à 80 %, **caractérisée en ce que** la méthode est conduite à une pression d'au moins 3,5 × 10³ g.cm⁻² (50 psi) et non supérieure à 7,0 × 10³ g.cm⁻² (100 psi).

2. Méthode suivant la revendication 1, dans laquelle lesdites cellules sont des cellules hématopoïétiques.

3. Méthode suivant la revendication 1, dans laquelle ladite caractéristique détectable à la lumière est une molécule à marquage fluorescent spécifique d'une protéine de membrane superficielle dudit sous-ensemble, et ladite méthode comprend en outre : la réaction dudit mélange de cellules avec ladite molécule à marquage fluorescent avant ledit passage d'un courant cellulaire.

4. Méthode suivant l'une quelconque des revendications 1, 2 et 3, dans laquelle lesdites cellules sont soit des cellules de moelle osseuse, soit des cellules de sang périphérique.

5. Méthode suivant l'une quelconque des revendications 1, 2, 3 et 4, dans laquelle ledit sous-ensemble est constitué de cellules souches.

6. Méthode suivant la revendication 3, dans laquelle ladite molécule à marquage fluorescent est un anticorps monoclonal spécifique de Thy-1 humain.

7. Méthode suivant la revendication 3, dans laquelle ledit mélange de cellules est enrichi en cellules CD34⁺.

8. Méthode suivant la revendication 3, dans laquelle ledit mélange de cellules est appauvri en cellules CD38⁺.

9. Méthode suivant la revendication 3, dans laquelle les cellules sont des cellules hématopoïétiques, et dans laquelle ledit sous-ensemble contient moins de 1 % des cellules dudit mélange.
